# EUROPÄISCHE PATENTANMELDUNG

(11) **EP 0 716 136 A2**
(43) Veröffentlichungstag der Anmeldung: **12.06.1996**
(21) Anmeldenummer: 95117570.2
(22) Anmeldetag: 08.11.1995
(51) Int. Cl.: C09J 7/04

(54) **Klebeband auf Basis eines Malivlieses**

(30) Priorität: 25.11.1994 DE 4442093
(71) Anmelder: Beiersdorf Aktiengesellschaft, D-20245 Hamburg (DE)
(72) Erfinder: Ganschow, Frank, D-25335 Elmshorn (DE)

(57) **Zusammenfassung**

Klebeband mit einem Vliesträger, der ein- oder beidseitig mit einem Kleber beschichtet ist, dadurch gekennzeichnet, daß der Vliesträger ein solcher vom Typ Malivlies ist.

## Beschreibung

Die Erfindung bezieht sich auf ein Klebeband, das aus einem bandförmigen Träger auf Basis eines Malivlieses besteht, der entweder auf seiner Unterseite mit einer Klebebeschichtung oder beidseitig mit einer Klebebeschichtung versehen ist.

Klebebänder dieser Art sind bekannt. Der bandförmige Träger wird dabei als Gewebe oder als Nähvlies ausgebildet, wobei Gewebebänder schon seit längerem im Handel sind und Bänder mit einem Nähvliesträger im DE - GM 94 01 037 beschrieben werden. Als Klebebeschichtung werden bevorzugt druckempfindliche Haftklebebeschichtungen eingesetzt.

Klebebänder mit einem Gewebeträger genügen hohen technischen Anforderungen, sind aber aufwendig herzustellen, teuer und neigen zum Durchschlagen der Klebmasse. Klebebänder mit Nähvliesträger haben zwar einen einfachen Aufbau, zeigen aber erhebliche Nachteile in der praktischen Anwendung, wie unzureichende Recyclingeigenschaften und Probleme aufgrund des heterogenen Vliesaufbaus mit verstärkenden Parallelnähten. Die Oberflächen solcher Vliesträger mit ihren vielen kleinen Erhebungen und dazwischen liegenden Tälern ergeben zunächst leichter abrollbare Klebebänder, aber allgemein sind unebene Trägermaterialien für Klebebänder eher unerwünscht, denn sie führen bei der Herstellung zu zusätzlichen Problemen und bei der Anwendung zu mangelhaften Verklebungen, etwa beim mehrlagigen Umwickeln von Kabelbäumen.

Demgemäß liegt der vorliegenden Erfindung die Aufgabe zugrunde, ein Klebeband so zu verbessern, daß die Nachteile des Standes der Technik nicht oder zumindest nicht in dem Umfang auftreten.

Gelöst wird diese Aufgabe durch ein Klebeband, wie es in den Ansprüchen näher gekennzeichnet ist.

Als Träger kommt ein Vlies vom Typ Malivlies zum Einsatz. Ein Malivlies ist dadurch gekennzeichnet, daß ein Querfaservlies durch die Bildung von Maschen aus Fasern des Vlieses verfestigt wird. Ein derartiges Vlies wird beispielsweise auf Nähwirkmaschinen des Typs "Malivlies" der Firma Malimo schon seit längerer Zeit hergestellt und ist unter anderem bei den Firmen Cottano GmbH und Techtex GmbH beziehbar. Ein weiteres kennzeichnendes Merkmal dieses Vlieses besteht darin, daß es auf der einen Seite eine sehr glatte und auf der anderen eine leicht faserige Oberfläche besitzt. Als Ausgangsmaterialien für den Träger sind insbesondere Polyester-, Polypropylen- oder Baumwollfasern vorgesehen. Die vorliegende Erfindung ist aber nicht auf die genannten Materialien beschränkt, sondern es können eine Vielzahl weiterer Fasern zur Herstellung des Vlieses eingesetzt werden.

Bei speziellen Anwendungsfällen wie zum Beispiel bei der Umwicklung von Kabelbäumen kann auf eine Beschichtung der Rückseite des Klebebandes ganz verzichtet werden. Je nach anderen praktischen Verwendungen kann neben der Klebebeschichtung eine zusätzliche Beschichtung der zweiten Trägerseite mit Acrylatlack ausreichen oder eine Kombination aus Schaum und Lack notwendig sein. Der Lack bzw. Schaum und Lack werden insbesondere auf der Oberseite des Trägers aufgetragen, die dadurch gekennzeichnet ist, daß sie die glattere der beiden Vliesseiten ist.
Die Beschichtung des Trägers kann bevorzugt nach dem im folgenden beschriebenen Verfahren erfolgen. Ist eine Beschichtung des Trägers mit Schaum und Lack vorgesehen, wird nach dem Rakelverfahren zunächst eine Acrylatdispersion auf das Trägermaterial geschäumt. Das entstehende Zwischenprodukt wird im Anschluß kalandert, um eine Verdichtung und Vernetzung der Schaumschicht zu erzielen, bevor eine Lackschicht aus Acrylatlack ebenfalls nach dem Rakelverfahren über der Schaumschicht aufgetragen wird.

Die Beschichtung der Klebeseite des Trägers, insbesondere mit einer selbstklebenden Beschichtung, erfolgt in üblicher Weise. Vorteilhaft ist die herkömmliche Durchführung der Beschichtung mit Streichbalken und Lösungsmittelmassen, besser aber erfolgt diese berührungslos oder fast berührungslos mittels Siebdrucktechnik (vergleiche DE - PS 3.346.100), wobei eine vollflächige oder auch segmentartige Kleberbeschichtung vorstellbar ist. Bezüglich der günstigsten Parameter wird ausdrücklich auf diese Patentschrift DE - PS 3.346.100 bezug genommen, insbesondere zur Viskosität und Art des Klebers, zu den verwendeten Sieben, Bahngeschwindigkeiten und sonstigen Maßnahmen. Aber auch die Beschichtung mittels Rollschlitzdüsenauftrag, insbesondere für Hot-melt-Kleber, kann zur Anwendung kommen. Wenn nur eine einseitige Beschichtung vorgesehen ist, erfolgt diese insbesondere auf die rauhere, faserige Seite des Vlieses, weil dies die Verankerung der Klebermasse auf dem Vlies fördert und gleichzeitig ein leichteres Abrollen von einer spiralförmigen Rolle erreicht wird. Das Verhalten des Klebebandes beim Abrollen kann durch die Rückseitenbeschichtung des Klebebandes weiter optimiert werden.

Das erfindungsgemäße Klebeband wird nachfolgend in seiner Herstellung in beispielhafter Ausführung beschrieben.

### Beispiel:

Auf einen Malivliesträger mit einem Flächengewicht von 100 g / m², der von der Firma Techtex GmbH bezogen werden kann, wird an einer Hänge im Rakelverfahren bei einer Bahngeschwindigkeit von 50 m / min und einer Temperatur von 60 °C als Klebmasse eine Naturkautschuk/Harz/Benzinklebemasse aufgetragen. Die Trocknung in der Hänge wird bei einer Temperatur von ebenfalls 60 °C vollzogen. Auf die unbeschichtete Trägervliesseite wird zunächst in einem Spannrahmentrockner in einem Strich nach dem Rakelverfahren, wobei der Rakel eine Position von 25° zum Zenit der Streichunterwalze einnimmt, eine Acrylatdispersion (Wasseranteil: 50 Gew.-%) aufgeschäumt. Das vorläufige Produkt wird bei einer durchschnittlichen Temperatur von 120 °C vorgetrocknet und anschließend in-line bei einer Temperatur von 150 °C bis 180 °C und einem Druck von 10 to kalandert.
Die Lackierung der Rückseite des schaumbeschichteten Trägers erfolgt ebenfalls in einem Spannrahmentrockner bei einer Bahngeschwindigkeit von 50 m / min, wobei zehn Gramm halogenfreier Acrylatlack (Primal 225 von der Firma Rohm und Haas) pro Quadratmeter beschichtet werden. Die Trocknung der Lackschicht findet bei 160 °C im Spannrahmentrockner statt, was gleichzeitig eine Kondensation des Schaumes bewirkt. Werden nur eine Lackschicht oder keine Beschichtung gewünscht, so fallen die entsprechenden Schritte im Herstellungsprozeß weg.

## Patentansprüche

1. Klebeband mit einem Vliesträger, der ein- oder beidseitig mit einem Kleber beschichtet ist,
dadurch gekennzeichnet, daß der Vliesträger ein solcher vom Typ Malivlies ist.

2. Klebeband nach Anspruch 1,
dadurch gekennzeichnet, daß das Malivlies ein Querfaservlies darstellt, das durch die Bildung von Maschen aus Fasern des Vlieses verstärkt ist.

3. Klebeband nach Anspruch 1,
dadurch gekennzeichnet, daß das Malivlies einheitlich aus Polyester-, Polypropylen-, Viskose-, Polyacryl- oder Baumwollfasern besteht.

4. Klebeband nach Anspruch 1,
dadurch gekennzeichnet, daß das Malivlies eine Dicke zwischen 60 und 150 µm aufweist.

5. Klebeband nach Anspruch 1,
dadurch gekennzeichnet, daß das Malivlies folgende Eigenschaften besitzt:
- Flächengewicht des Trägers : 60 - 150 g / m²
- Reißfestigkeit je nach Material (nach DIN 53 455) : 30 - 100 N / cm

6. Klebeband nach Anspruch 1,
dadurch gekennzeichnet, daß der Malivliesträger einseitig mit einer selbstklebenden Masse beschichtet ist.

7. Klebeband nach Anspruch 1,
dadurch gekennzeichnet, daß der Malivliesträger auf seiner Rückseite eine Beschichtung aus Lack aufweist.

8. Klebeband nach Anspruch 1,
dadurch gekennzeichnet, daß der Malivliesträger auf seiner Rückseite eine Beschichtung aus Schaum aufweist, auf die zusätzlich eine Lackschicht aufgetragen ist.

9. Klebeband nach Anspruch 1,
dadurch gekennzeichnet, daß der Malivliesträger beidseitig mit einer selbstklebenden Masse beschichtet ist.

10. Klebeband nach Anspruch 1,
dadurch gekennzeichnet, daß die Klebebeschichtung eine selbstklebende Beschichtung ist.

11. Verwendung eines Klebebandes nach Anspruch 1 zum Bandagieren von Kabelbäumen, wie sie insbesondere in der Automobilindustrie eingesetzt werden.
